# EUROPEAN PATENT SPECIFICATION

(11) **EP 2 140 690 B1**
(45) Date of publication and mention of the grant of the patent: **12.02.2014**
(21) Application number: 07748461.6
(22) Date of filing: 03.05.2007
(51) Int. Cl.: H04W 52/02

(54) **A BASE STATION, A MOBILE TERMINAL AND A METHOD FOR WIMAX SYSTEM**
BASISSTATION, MOBILES ENDGERÄT UND VERFAHREN FÜR EIN WIMAX-SYSTEM
STATION DE BASE, TERMINAL MOBILE ET PROCÉDÉ POUR UN SYSTÈME WIMAX

(43) Date of publication of application: 06.01.2010
(73) Proprietor: Telefonaktiebolaget LM Ericsson (publ), 164 83 Stockholm (SE)
(72) Inventor: LAMM, Anders, S-431 38 Mölndal (SE); LINDGREN, Stefan, S-434 92 Vallda (SE); TSAI, Shiau-He SHAWN, San Diego, CA 92126 (US)
(74) Representative: Kühn, Friedrich Heinrich
(86) International application number: PCT/SE2007/050300
(87) International publication number: WO 2008/136714

(56) References cited:
- WO-A1-00/35107
- WO-A1-00/35107
- WO-A1-02/09306
- WO-A2-02/07459
- WO-A2-02/43412
- WO-A2-98/54919
- WO-A2-2006/036299
- GB-A- 2 366 138
- OMANAND JHA VATSA ET AL: "Adaptive Power Saving Algorithm for Mobile Subscriber Station in 802.16e", COMMUNICATION SYSTEMS SOFTWARE AND MIDDLEWARE, 2007. COMSWARE 2007. 2N D INTERNATIONAL CONFERENCE ON, IEEE, PI, 1 January 2007 (2007-01-01), pages 1-7, XP031113896, ISBN: 978-1-4244-0613-5
- "Project MESA; Technical Specification Group SYSTEM; Technologies with Potential Applicability to Project MESA", ETSI DRAFT; DTR-MESA-SYS0070008V131, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. v1.3.1, 12 April 2005 (2005-04-12), pages 1-215, XP014063795, [retrieved on 2005-04-12]

## Description

### Technical Field

The present invention relates to wireless communication between a base station and a mobile terminal in a communications network such as WiMAX. In particular, the invention relates to reducing the power consumption of the terminals in such a network.

### Background and Related Art

WiMAX, which is an abbreviation of World-wide Interoperability for Microwave Access, is an implementation of the IEEE standard 802.16, for providing wireless network access. In particular, the development of IEEE 802.16e provides the specifications of WiMAX services to mobile terminals in a cellular environment. WiMAX is intended for use in wireless Metropolitan Access Networks, MAN, and is described as a standards-based technology enabling the delivery of last mile wireless broadband access as an alternative to cable and DSL.

When directing an incoming call to a mobile station in a cellular environment, paging must be first performed to locate the receiving mobile terminal and to establish an active radio connection with it for the following traffic. Due to the limited capacity of batteries, it is not practical for the mobile terminal to maintain a persistent radio connection to the base station. During the idle state, the mobile terminal only wakes up periodically to check base station paging signals. To maximize the stand-by time, the wake-up duty cycle should be kept as low as possible with an acceptable paging delay. Meanwhile, the power consumption during the wake-up period should also be kept as low as possible.

One technique generally used to save mobile power during the wake-up period is to insert a simple energy signal in advance to indicate that a paging message will soon be sent to the mobile terminal. Instead of demodulating and decoding the entire **downlink, paging** message during every w**ake-up period, the mobile terminal only** detects if there is a simple energy signal directing to it before activating its entire demodulation and decoding device. Such a signaling mechanism based on simple energy detection before triggering entire paging process is called paging indicator, as in WCDMA, or quick paging, as in CDMA. By turning off demodulators for regular paging message during most wake-up periods and by only monitoring a simple energy signal, significant power saving and stand-by time extension is achieved.

In the current WiMAX system, there is no paging indicator or quick paging signal. The mobile terminal, during stand-by mode, needs to wake up periodically and turn on the demodulator and decoder to read the Base Station Broadcast Paging (MOB_PAG-ADV) message. When waking up in paging intervals, the mobile terminal first reads the FCH and the DL-MAP to look for the location and the format of the broadcast CID. Then, the mobile terminal will demodulate the broadcast burst that contains the MAC PDU of MOB_PAG-ADV message. Most of the time, there is no paging information for the mobile terminal or only a dedicated Action Code 0b00 (meaning no action required). The processing of reading FCH, DL-MAP, and the MAC PDU burst will invoke the entire baseband modem function, hence drains mobile's battery over time. During each paging interval, the mobile terminal has to be awake and demodulate the broadcast messages for 2 to 5 frames. In addition, a change in the downlink or uplink channel descriptor (DCD or UCD) also triggers a paging broadcast to wake up all mobile terminals to update the system parameters, although there is no dedicated page message to every one of them.

WO 00/35107 especially relates to CDMA 2000, and is set out to ensure up-to-date stored configuration parameter values after idle handoffs. A method for determining whether to wake up a mobile station is suggested, and it is disclosed how the mobile station will wake up for its regular paging slot and stay awake until the configuration parameter values are up-to date, only if determining that the configuration has changed after receiving a configuration change quick bit.

WO 98/54919 relates to paging a wireless terminal in e.g. a cellular telephone system operating in accordance with the IS-95 standard. A quick page message is transmitted via a less encoded channel and a full page message is generated via a more encoded channel. The quick page message indicates that a request to communicate has been received and that the receiving communication terminals should process a highly encoded full paging channel transmitted during the next full paging slot for a more detailed, full page message.

WO 2006/036299 relates to IEEE 802.16e, and it is disclosed how mobile stations in an inactive state are notified of the presence of UL or DL channel configuration, broadcast system updates, traffic channel allocations and paging messages. The notification can be provided in an information element which identifies a subsequent frame which includes broadcast or configuration changes.

OMANAND JHA VATSA ET AL: "Adaptive Power Saving Algorithm for Mobile Subscriber Station in 802.16e", COMMUNICATION SYSTEMS SOFTWARE AND MIDDLEWARE, 2007, COMSWARE 2007. 2N D INTERNATIONAL CONFERENCE ON, IEEE, PI, 1 January 2007 (2007-01-01), pages 1-7, XP031113896, ISBN: 978-1-4244-0613-5) relates to modifying the existing sleep mode interval determination algorithm for power Class A operation in the IEEE 802.16e standard, by making it adaptive to the varying downlink traffic patterns. It is disclosed how potential savings in energy consumption in sleep mode may be achieved by intelligently predicting the traffic arrival pattern, such that the number of listening periods during sleep mode is reduced.

### Object of the Invention

It is an object of the invention to reduce the power consumption during idle time in mobile terminals according to the 802.16 standard. The person skilled in the art can easily generalize this invention to OFDM-based systems with similar frame structure.

### Summary of the Invention

This object is achieved with the base station, the mobile terminal and the methods according to the invention, which are characterized by the features stated in the independent claims.

Advantageous embodiments of the invention are presented in the dependent claims.

### Acronyms and Abbreviations

- BS: Base station
- BW: Bandwidth
- CDMA: Code Division Multiple Access
- CID: Connection ID
- DCD: Downlink channel descriptor
- DL: Downlink
- FCH: Frame control header
- MAC: Medium Access Control
- OFDMA: Orthogonal frequency division multiple access
- PDU: Protocol Data Unit
- PS: Physical slot = 4 OFDM time samples
- **RTG**: **Receive-to-transmit Transition Gap**
- TDD: Time Division Duplex
- TTG: Transmit-to-receive Transition Gap
- UCD: Uplink channel descriptor
- UL: Uplink
- WCDMA: Wideband CDMA
- WiMAX: Worldwide interoperability for microwave access

### Brief Description of the Drawings

The invention will be described in more detail in the following, by way of example and with reference to the appended drawings in which:
Figure 1 illustrates a general WiMAX system.
Figure 2 is an overall flow chart of the inventive method.
Figure 3a illustrates a WiMAX TDD frame structure and Figure 3b illustrates the paging interval with such a frame structure.
Figure 4 is a diagram illustrating timing advance in WiMAX.
Figure 5 illustrates the location of a wake-up message according to one exemplary embodiment of the invention in a WiMAX TDD frame structure.
Figure 6 illustrates the location of a wake-up message according to another exemplary embodiment of the invention in a WiMAX TDD frame structure.
Figures 7a, 7b and 7c illustrate possible formats of the quick paging signal.

### Detailed Description

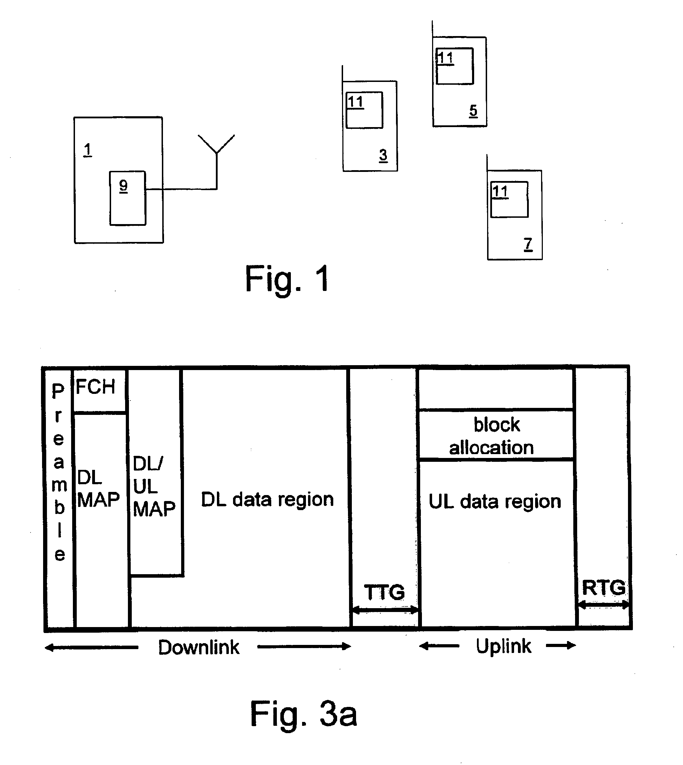

Figure 1 illustrates a general WiMAX system for providing wireless communication with mobile terminals. The system comprises a base station 1 communicating with a number of mobile terminals 3, 5, 7. As is common in the art, the mobile terminals 3, 5, 7 are arranged to go into standby mode when they are not engaged in communication with the base station 1. To wake up a mobile terminal when it should engage in communication, the base station sends a paging signal through a communication means 9 in the base station 1. This paging signal is received and interpreted in a receiving unit 11 in the mobile terminal. To interpret the paging signal the mobile **terminal must turn on its demodulator and decoder (not shown), which must be** done at regular intervals, in case a paging signal intended for the terminal is received.

According to the invention, before sending the paging signal, the communication means 9 of the base station sends a wake-up signal to indicate to the mobile terminal concerned that it should prepare itself for a paging signal. The wake-up signal is a simple signal that can be received by the mobile terminal by simple energy detection. Since the wake-up signal can be detected by the mobile terminal using less battery resources, this saves battery power in the mobile terminals. As long as no such wake-up signal has been received, the mobile terminal does not have to prepare itself for receiving a paging signal. The format and location of the wake-up signal will be discussed in more detail in the following.

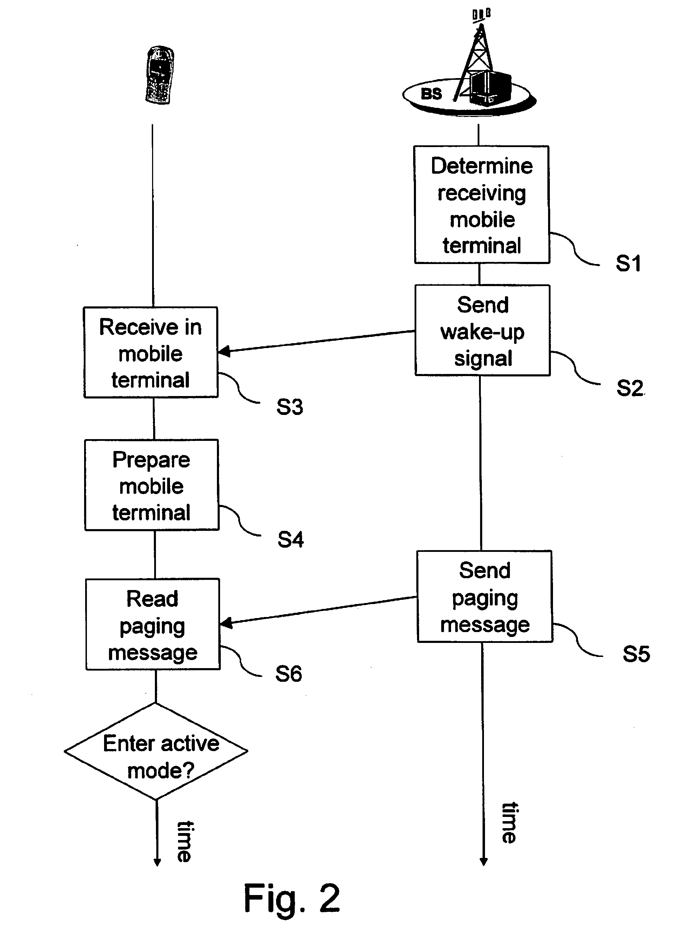

Figure 2 is a flow chart of the overall method according to the invention.
In step S1 the base station 1 determines that a paging signal should be sent to an identified one of the mobile terminals 3, 5, 7.
In step S2 the base station 1 first sends a wake-up signal, or quick paging signal, to the identified mobile terminal.
In step S3 the mobile terminal receives the wake-up signal.
In step S4 the mobile terminal prepares itself to receive the proper paging signal. This includes turning on the demodulator and decoder to read the paging message. In step S5 the base station 1 sends a paging signal according to the prior art to the mobile terminal. The time between the transmission of the wake-up signal and the paging message, that is, the time between steps S3 and S5, should be equal to or slightly longer than the propagation plus mobile processing delay.
In step S6 the mobile terminal receives the paging signal and goes into active mode to start communicating with network through the base station 1.
Steps S1, S2 and S5 are performed by the communication means 9 in the base station, whereas steps S3, S4 and S6 are performed by the receiving unit 11 in the mobile terminal 3, 5, 7 concerned.

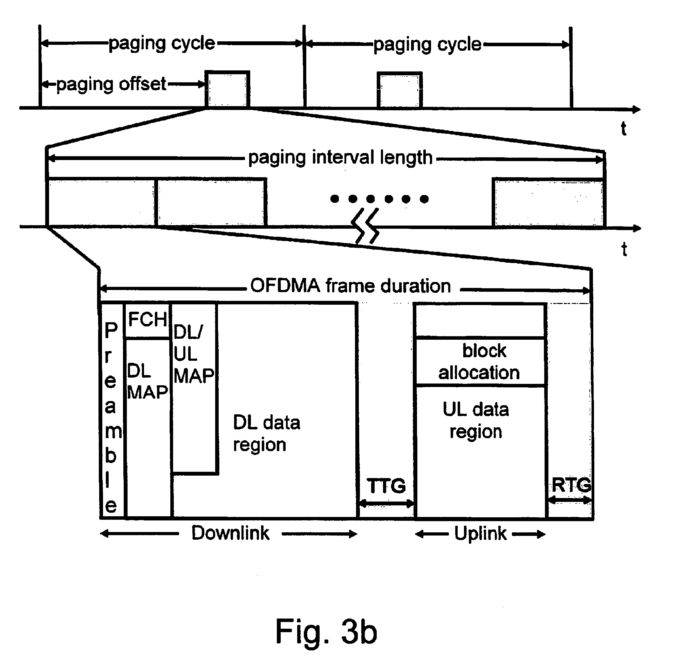

The WiMAX TDD frame structure is shown in Figure 3. The frame is divided into the Downlink (DL) and the Uplink (UL) subframes, separated by a transmit-to-receive transition gap (TTG), in which the base station switches off its transmitter and switch on their receivers to prepare for receiving from the mobile terminals. At the same time, the mobile terminals switch off their receivers and switch on their transmitters. Each DL subframe starts with a preamble followed by a frame control header (FCH); both have fixed length and location. The length and the format of the DL MAP are specified by the FCH. The length and the format of the UL MAP are given in the DL MAP. At the end of the UL subframe, there is a receive-to-transmit transition gap (RTG), in which the base station switches off the receiver and switches on its transmitter. During the RTG, the active mobile terminal switches off its UL transmitter and switches on its receiver for receiving the next DL subframe.

The paging process currently done in WiMAX is illustrated in Figure 3b. The time axis is divided into paging cycles. Each mobile terminal is addressed by the base station once every cycle. The location of each mobile terminal's paging signal in each cycle is determined by the paging offset. The paging message may span over several frames and a mobile may need to demodulate several frames to read the entire message. The length of the message is specified by the paging interval length in the unit of frames. According to the invention, a simple wake-up signal is inserted within each paging interval to reduce the mobile terminal's processing power consumption without reading the entire paging message. To extend coverage, the simple wake-up signal may also span over the entire paging interval of several frames for improved energy detection. The mobile terminal can accumulate more energy for reliable detection without turning on the entire demodulator/decoder chain.

The wake-up signal according to the invention, that is sent to a mobile terminal to indicate that it should prepare for receiving a paging signal, should be located in a fixed position of the frame, so that the terminal would know what part of the frame to consider. To this end, the wake-up signal may be located in different parts of the **frame shown in** **Figure 3a****, as will be discussed below.**

In a preferred embodiment, which is currently considered to be the best mode of the invention, the wake-up signal is inserted in one of the transition gaps, that is, the TTG or the RTG, that is, when the base station is turning off its transmitter and turning on its receiver or vice versa. Therefore, some of this time could be used by the base station to transmit a wake-up signal while there would still be time to perform the transmit to receive transition.

In the current WiMAX frame, TTG serves two purposes: the first is to reduce the interference in the beginning of a UL subframe caused by long propagation of the DL subframe from other cells, and the second is to allow far users to advance their timing for synchronized UL transmission. The typical TTG specified in the system profile is on the order of 100 µsec. Most DL signals from other cells become negligible after such a long propagation.

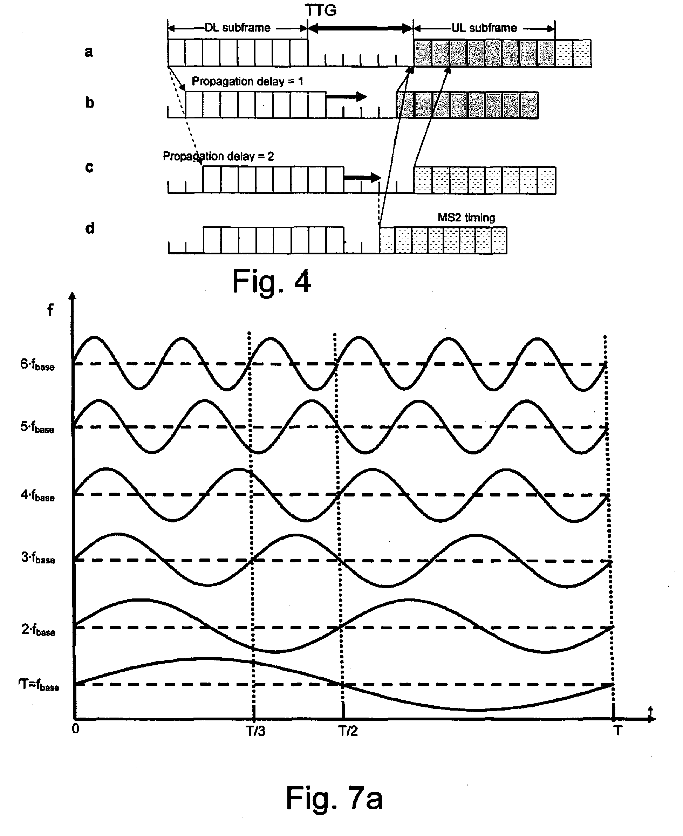

The far users, in addition to time needed to switch between receiving and transmitting, also need to compensate their UL propagation delays by advancing their transmit timing. This illustrated in Figure 4, which shows, as an example, the frame timing of four frames in TDD:
a) for the base station
b) for a first mobile terminal located near the base station
c) for a second mobile terminal located far from the base station, with no timing advance
d) for the second mobile terminal, with timing advance

The actual available switching gap between transmitting and receiving in each case is represented by a solid arrow. As can be seen, for the first mobile terminal, illustrated in b) which is located near the base station, the available switching gap is shortened by the propagation delay of one time unit in the downlink, and the timing advance of one time unit in the uplink to align with the base station's uplink subframe timing. For the second mobile terminal, as illustrated in c) with no timing advance, the available switching gap is shortened by the propagation delay in the downlink, but not in the uplink. The second mobile terminal will then have the same length of available switching gap as the first terminal, but will lose its synchronization with base station's uplink subframe timing by two time units. With timing advance of two time units, as shown in d), the transition gap will be further shortened by the propagation delay in the downlink and the timing advance in the uplink will be in sync with the uplink subframe timing.

From each mobile terminal, the TTG should be larger than the sum of its receive-transmit switching time and DL/UL propagation delays seen at its location. But for idle mode terminals waiting for paging, there is no need to prepare for uplink transmission right after the TTG. Therefore, the DL subframe can be prolonged into the TTG to include wake-up signals, which only the idle users listen to and the active users treat as non-existent, as long as the interference to other cells is maintained below an acceptable level.

As mentioned above, the wake-up signal could also be located in the RTG. In the current WiMAX, RTG allows the UL signal to fade before the next DL subframe takes place such that strong interference from near-by mobile terminals to the DL reception can be avoided. In the WiMAX system profile, the RTG value is either 60 µs or 74.4 µs, which roughly corresponds to 18km or 22km in distance. In many deployment scenarios, the signal from a mobile terminal is not likely to interfere with far users after long propagation and there will be room at the end of RTG with negligible amount of UL interference. Therefore, the base station can insert the wake-up signal right before the next preamble without it being severely corrupted by the residual UL propagation. There could be some degradation in the preamble acquisition when compared with an empty RTG, but with properly designed wake-up signal waveform, the impact can be reduced.

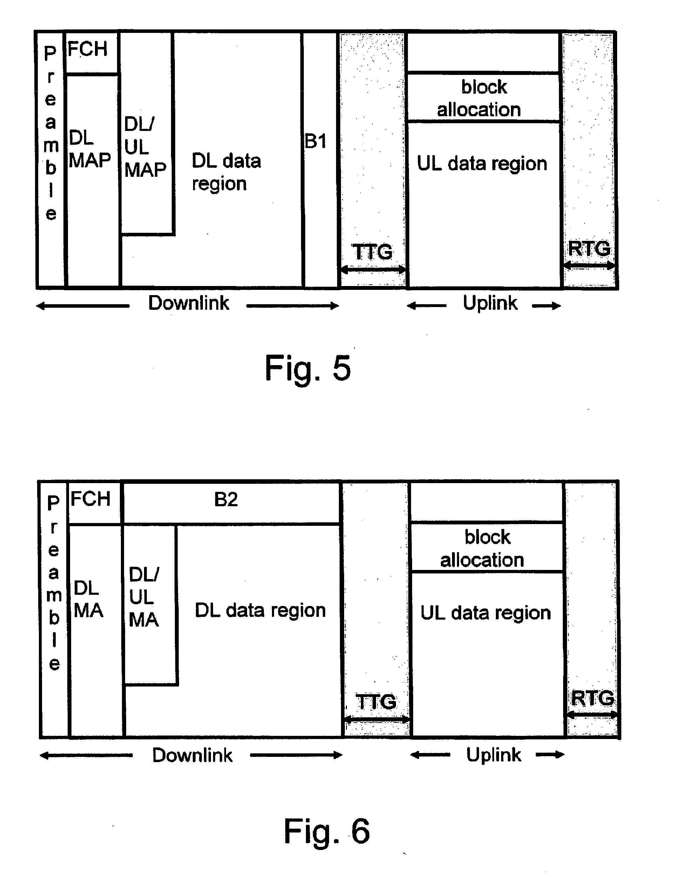

Figure 5 illustrates a third possible location of the wake-up signal: at the end of the DL subframe in all subchannels, as illustrated by a block b1. This can be achieved by modifying the DCD or hard coding new mobile terminals. The base station can simply avoid allocating any data bursts into this location by restricting its own DL MAP from using the end of a DL subframe.

The three possible locations of the wake-up signal discussed above have the advantage of being backwards compatible, that is, they can be implemented without any impact to the legacy mobile terminals.

A fourth possible location of the quick paging signal would be a fixed block allocation. The allocation is similar to the block allocation of ranging, fast-feedback, and PAPR-reduction/Safety/Sounding zones currently used on the uplink for other purposes. Hence, it does not introduce any new resource allocation scheme. Through adding new fields in the DCD, the new mobile terminals can be assigned to this new DL block allocation for quick paging. This embodiment may not be backward compatible. Meanwhile, the base station can organize the DL MAP for the existing mobile terminals being consistently excluded from the new wake-up signal region. In this way, existing, or legacy, mobile terminals will not benefit from the wake-up signal but can still be used.

A fifth possible location of the quick paging signal would be immediately following the FCH, as illustrated in Figure 6 by a block b2. Because the preamble and the FCH have fixed lengths, this location does not change from frame to frame. However, inserting wake-up signal into this location generates backward compatibility issues, since existing mobile terminals are supposed to search for DL MAP at this location.

A series of consecutive wake-up signals for the same terminal may be sent in consecutive frames. In this case the mobile terminal will be arranged to monitor for a specified number of consecutive wake-up signals before it will prepare itself for receiving the proper paging signal. The number of wake-up signals needed should be predetermined and may be selected arbitrarily. For example, two, three or four consecutive wake-up signals may be required.

The format of wake-up signal shall satisfy the fundamental requirement of being received by simple energy detection. Formats of wake-up signal include the following options:
- Single or multiple tones in DL subframe data region with or without a signature sequence
- A set of evenly spaced tones with fractional symbol duration
- Single-carrier pulses

Single or multiple tones in DL subframe data region with or without a signature sequence will work for all the different locations of the signal discussed above. This format can be applied to any location listed in the previous subsection. The wake-up signal can be indicated by the existence of one or multiple tones assigned to the idle user. In addition, orthogonal coding can be applied to those tones. Also, if more capacity is needed, wake-up signals of different users might be modulated by signature sequences with low cross-correlation, provided that the false alarm rate is maintained under a desired level.

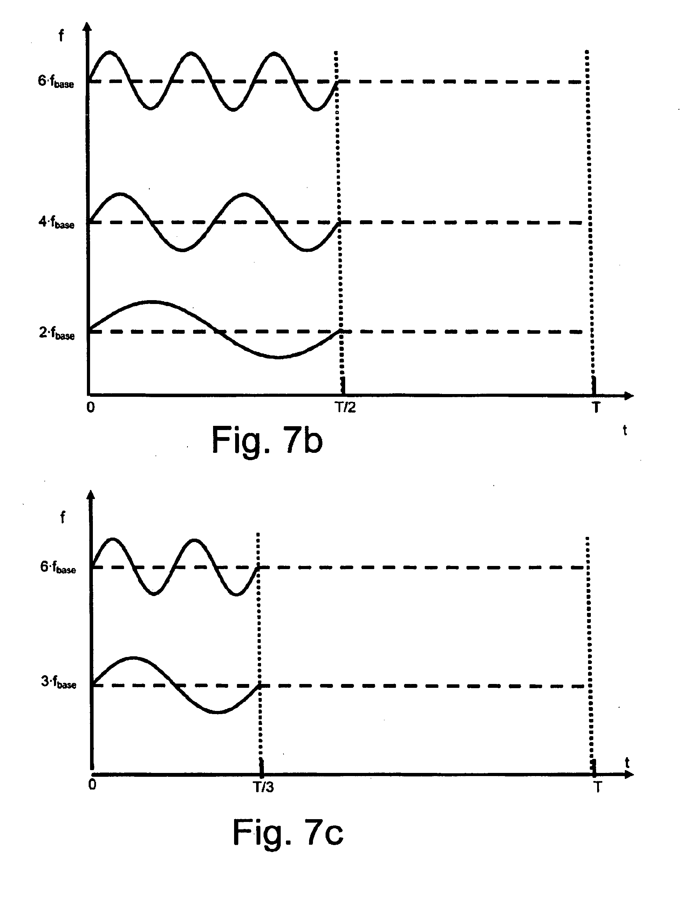

A set of evenly spaced tones with fractional symbol duration can be used if the wake-up signal is located in the TTG or the RTG. Wake-up signal of one OFDMA symbol may be too long for the TTG. As shown in Table 1 below, in the first release of WiMAX system profile, which is the most typical implementation of the 802.16 OFDMA mode, the OFDMA symbol duration is chosen to be 102µs and the TTG 105µs. If the wake-up signal occupies one OFDMA symbol duration, it leaves only 3µs before the base stations start receiving UL signals. As a result, wake-up signals from other base stations will interfere with the UL signal. One solution is to transmit only some of the tones. This is illustrated in Figure 7a, which shows the duration of the OFDMA symbol for different frequencies 1/T_{base}=f_{base}, 2f_{base}, , etc. up to 6f_{base}, where T_{base} is the useful OFDM symbol duration and its reciprocal is called the base frequency. As can be seen, the period for the frequency 2f_{base} is half of that for f_{base}, the period for the frequency 3f_{base} is one third of that for f_{base}, etc. Hence, using, for example, every other tone starting with 2f_{base} will reduce the wake-up OFDMA symbol duration to half. This is illustrated in Figure 7b, which shows the wake-up signal with ½ OFDM symbol duration based on integer multiples of 2f_{base}. Following the same principle, using only every third tone 3f_{base}, 6f_{base}, 9f_{base} etc., will reduce the wake-up symbol duration to one third. This is illustrated in Figure 7c, which shows the wake-up signal with 1/3 OFDM symbol duration based on integer multiples of 3f_{base}. As a general rule, using the subset of tones whose frequencies are integer multiples of the Nth harmonic of the base frequency, 1/T_{base}, the wake-up signal transmitted symbol duration can be effectively shortened to 1/N of the useful OFDM symbol duration, T_{base}. At the receiver side, the same FFT module for demodulating other OFDM symbols of T_{base} duration can be used by simply padding zeros outside the shortened T_{base}/N wake-up symbol duration to perform energy detection. At the transmitter side, only the first 1/N of the N_{FFT} samples is converted from digital to analogue waveform for RF transmission. That is, no new hardware is required to send or detect this type of wake-up signal. As explained, all of these frequencies may be used for wake-up signals, or a subset, such as every second, or every third frequency may be selected with a corresponding, fractional OFDM symbol time. This fractional frequency-time space usage can accommodate the newly inserted wake-up signals and still leaves time for residual DL signal energies to fade without interfering with the UL. The advantage of this approach is that the same FFT circuit can be used at the base station transmitter, while the mobile terminal's receiver can apply the same preamble detector, over a fractional symbol time window. The wake-up signal, when being sent with fractional symbol duration, might have coverage issues because of shorter symbol time to accumulate energy. A combination of multiple fractional-symbol-time wake-up signals over multiple frames that are dedicated to the same recipient(s) can be used to improve the coverage.

Single-carrier pulses: Single-carrier pulses can be introduced to carry the wake-up energy signal in the TTG or RTG, outside the normal data region of an OFDMA frame. These pulses can be modulated by a user-dependent signature sequence to improve detection performance. The signature sequence can be mutually orthogonal or lowly cross correlated among different users. In the general sense, signature sequence modulation also includes time multiplexed pulses, since each individual one can be viewed as modulated by a sequence with non-zero values only at time instances the pulse is sent.

**Table 1: RTG and TTG in WiMAX System Profile**

| Maximum TTG and RTG Switching Time per Channel Band-Width | | | | | | | |
|---|---|---|---|---|---|---|---|
| BW (MHz) | fs (MHz) | PS (µs) | RTG (PSs) | RTG (µs) | TTG (PSs) | TTG (µs) | Ts,Symbol time (µs) |
| 3.5 | 4 | 1 | 60 | 60 | 188 | 188 | 144 |
| 5 | 5.6 | 0.714286 | 84 | 60 | 148 | 105.7142857 | 102,9 |
| 7 | 8 | 0.5 | 120 | 60 | 376 | 188 | 144 |
| 8.75 | 10 | 0.4 | 186 | 74.4 | 218 | 87.2 | 115,2 |
| 10 | 11.2 | 0.357143 | 168 | 60 | 296 | 105.7142857 | 102,9 |

The wake-up signal should ideally be directed at one particular mobile terminal, which should be woken up in order to receive a proper paging signal. This will be optimal for saving battery time in the mobile terminals. On the other hand it may be easier to implement embodiments in which a wake-up signal can indicate a group comprising more than one mobile terminal. The mobile terminals in the group will all interpret the wake-up signal as intended for them and will start listening for a paging signal. Hence, for the mobile terminals of the group that are not about to receive a paging signal, some battery power will be wasted compared to the embodiments where a wake-up signal only indicates one mobile terminal. On the other hand an improvement will still be achieved compared to the prior art.

In a WiMAX system, the mobile terminal is recognized by its 48-bit MAC address. In the BS broadcast paging message, the mobile terminal identifies its paging instruction by the "MS MAC Address hash" field. This 24-bit field has 2²⁴=16769024 possible values. Hence, the wake-up signal cannot be mapped to one particular MS MAC Address hash. There are several ways to reduce the required wake-up signal space for mapping the identities of mobile terminals.

One option is to group hashed MAC addresses by frame number: In each frame, only a subset of MAC address will be mapped to the wake-up signal. For example, if there are 2⁷=128 signals in the wake-up signal space for one frame, then 2¹⁷= 131072 frames will be needed to complete the mapping to all possible 24-bit hashed MAC addresses. As can be understood, the drawback of this method is that it causes a delay in the paging response from the mobile terminal.

Alternatively the hashed MAC addresses can be divided into subsets by wake-up groups: One wake-up signal can be mapped to multiple MAC addresses. The set of MAC addresses being mapped to the same wake-up signal, that is, the addresses of all mobile terminals that will be woken up by the same energy signal, is a wake-up group. The drawback of this method is that other users in the same group that are not being paged may also be alarmed by the wake-up signal.

A third option would be to assign a sector-specific wake-up number to each mobile terminal that is actually in the relevant area, This wake-up number should be cancelled when the mobile terminal leaves the area, so that it can be reassigned to another mobile terminal. Some sector will not accommodate more than some thousands of mobile terminals. In reality a sector specific number can be assigned to each mobile terminal for wake-up during network entry. The set of such wake-up numbers should be much smaller than the set of hashed MAC addresses.

A specific exemplary embodiment of the third option would be to use an identification number already used in the 802.16 standard to identify mobile terminals, such as the Connection ID (CID), as a wake-up number. The CID, which is 16-bit long, or its reduced format, which can be 11-, 7- or 3-bit long, may be used for the wake-up num**ber purpose. That is, before a mobile terminals completely de-register from the pag**ing zone, one of its CID, e.g., basic CID, is still maintained in a network paging logic entity. There will be some additional constraints for a sector to coordinate its CID assignment with other sectors in the paging zone. In another embodiment, a dedicated segment of the 2¹⁶ CID space can be created for each paging zone as the wake-up identifier. The grouping techniques mentioned above is also applicable to CID-based wake-up identifier to reduce the number of signals in the space of wake-up signalling.

Any of the methods listed above for identifying the mobile terminal that is to receive a paging message may be used alone or in combinations of two or more. For example, different sectors may use different approaches.

## Claims

1. A base station (1) for use in a WiMAX system for communicating with a number of mobile terminals (3, 5, 7), said base station (1) comprising communication means (9) for sending a paging signal to an identified mobile terminal (3, 5, 7), wherein the communication means (9) is arranged to send a wake-up signal to the identified mobile station (3, 5, 7), to indicate to the identified mobile terminal (3, 5, 7) that it should prepare itself for a paging signal, before sending the paging signal to the identified mobile terminal (3, 5, 7), the base station (1) being **characterized in that** the communication means (9) is arranged to place the wake-up signal in one of the transition gaps, TTG or RTG in a frame.

2. A mobile terminal (3, 5, 7) arranged to communicate with a base station (1) in a WiMAX system, said mobile terminal (3, 5, 7) being arranged to go into idle mode when it is not communicating with the base station (1) and comprising a receiving unit (11) for receiving a paging signal when it should go into active mode to start communicating with network through the base station (1), wherein the receiving unit (11) is also arranged, when in idle mode, to receive a wake-up signal from the base station (1) and upon receiving the wake-up signal, prepare itself to receive the paging signal by turning on the demodulator and decoder of the mobile terminal, said mobile terminal (3, 5, 7) being **characterized in that** the receiving unit (11) is arranged to detect the wake-up signal in one of the transition gaps, TTG or RTG in a frame.

3. A method for use in a base station (1) in a WiMAX system the base station (1) communicating with a number of mobile terminals (3, 5, 7), comprising the following steps:
- determining that a paging signal should be sent to an identified mobile terminal (3, 5, 7) in the system;
- sending a wake-up signal, to the identified mobile terminal (3, 5, 7), to indicate that the identified mobile terminal (3, 5, 7) is about to receive a paging signal;
- sending a paging signal to the identified mobile terminal (3, 5, 7) shortly after sending the wake-up signal, the method being **characterized in that** the wake-up signal is sent in one of the transition gaps, TTG **or RTG in a frame.**

4. A method according to claim 3, wherein the wake-up signal is sent as a simple signal that can be received by the mobile terminal by simple energy detection.

5. A method according to any one of the claims 3-4, wherein the wake-up signal is sent at the end of the downlink subframe.

6. A method according to any one of the claims 3-4, wherein the wake-up signal is sent as a set of evenly spaced tones with fractional symbol duration.

7. A method according to any one of the claims 3-6, wherein the mobile terminal is identified in the wake-up signal by means of its MAC address.

8. A method according to any one of the claims 3-6, wherein the mobile terminal is identified in the wake-up signal by means of a sector specific address assigned to the terminal.

9. A method according to any one of the claims 3-6, wherein the mobile terminal is identified in the wake-up signal by means of an identifier based on an identification number previously assigned to the terminal, such as the Connection ID.

10. A method for use in a mobile terminal (3, 5, 7) in a WiMAX system the mobile terminal (3, 5, 7) being arranged to communicate with a base station (1) and to go into idle mode when it is not communicating with the base station (1), the method comprising the following steps:
- receiving from the base station a wake-up signal in the mobile terminal (3, 5, 7) when in idle mode,
- upon receiving the wake-up signal, preparing the mobile terminal (3, 5, 7) for receiving a paging signal by turning on the demodulator and decoder of the mobile terminal (3, 5, 7),
- receiving the paging signal, and
- upon receiving the paging signal, going into active mode to start communicating with network through the base station (1), the method being **characterized in that** the wake-up signal, **is received in one of the transition gaps. TTG, or RTG in a frame.**

11. A method according to claim 10, wherein the wake-up signal is a simple signal that can be received by the mobile terminal by simple energy detection.

12. A method according to any one of the claims 10-11, wherein the wake-up signal is received at the end of the downlink subframe.

13. A method according to any one of the claims 10-12, wherein the wake-up signal is located in the frame by fixed block allocation.

14. A method according to any one of the claims 10-12, wherein the wake-up signal is received as a set of evenly spaced tones with fractional symbol duration.

15. A method according to any one of the claims 10-13, wherein the wake-up signal is received as single or multiple tones in the downlink subframe data region.

## Patentansprüche

1. Basisstation (1) zur Verwendung in einem WiMAX-System zum Kommunizieren mit einer Anzahl von mobilen Endgeräten (3, 5, 7), wobei die Basisstation (1) ein Kommunikationsmittel (9) zum Senden eines Rundrufsignals an ein identifiziertes mobiles Endgerät (3, 5, 7) umfasst, worin das Kommunikationsmittel (9) dafür eingerichtet ist, ein Wecksignal an das identifizierte mobile Endgerät (3, 5, 7) zu senden, um das identifizierte mobile Endgerät (3, 5, 7) darauf hinzuweisen, dass es sich auf ein Rundrufsignal vorbereiten soll, bevor das Rundrufsignal an das identifizierte mobile Endgerät (3, 5, 7) gesendet wird, wobei die Basisstation (1) **dadurch gekennzeichnet ist, dass** das Kommunikationsmittel (9) dafür eingerichtet ist, das Wecksignal in einer der Übergangslücken, TTG oder RTG, in einem Rahmen zu platzieren.

2. Mobiles Endgerät (3, 5, 7), das dafür eingerichtet ist, mit einer Basisstation (1) in einem WiMAX-System zu kommunizieren, wobei das mobile Endgerät (3, 5, 7) dafür eingerichtet ist, in die Leerlaufbetriebsart überzugehen, wenn es nicht mit der Basisstation (1) kommuniziert, und eine Empfangseinheit (11) umfasst zum Empfangen eines Rundrufsignals, wenn es in die aktive Betriebsart übergehen soll, um zu beginnen, über die Basisstation (1) mit dem Netzwerk zu kommunizieren, worin die Empfangseinheit (11) außerdem dafür eingerichtet ist, in der Leerlaufbetriebsart ein Wecksignal von der Basisstation (1) zu empfangen und sich bei Empfang des Wecksignals darauf vorzubereiten, das Rundrufsignal zu empfangen, indem sie den Demodulator und Decoder des mobilen Endgeräts einschaltet, wobei das mobile Endgerät (3, 5, 7) **dadurch gekennzeichnet ist, dass** die Empfangseinheit (11) dafür eingerichtet ist, das Wecksignal in einer der Übergangslücken, TTG oder RTG, in einem Rahmen zu ermitteln.

3. Verfahren zur Verwendung in einer Basisstation (1) in einem WiMAX-System, wobei die Basisstation (1) mit einer Anzahl von mobilen Endgeräten (3, 5, 7) kommuniziert, die folgenden Schritte umfassend:
- Bestimmen, dass ein Rundrufsignal an ein identifiziertes mobiles Endgerät (3, 5, 7) in dem System gesendet werden soll;
- Senden eines Wecksignals an das identifizierte mobile Endgerät (3, 5, 7), um darauf hinzuweisen, dass das identifizierte mobile Endgerät (3, 5, 7) gleich ein Rundrufsignal empfangen wird;
- Senden eines Rundrufsignals an das mobile Endgerät (3, 5, 7) kurz nach dem Senden des Wecksignals, wobei das Verfahren **dadurch gekennzeichnet ist, dass** das Wecksignal in einer der Übergangslücken, TTG oder RTG, in einem Rahmen gesendet wird.

4. Verfahren nach Anspruch 3, worin das Wecksignal als ein einfaches Signal gesendet wird, das durch das mobile Endgerät durch einfache Energieermittlung empfangen werden kann.

5. Verfahren nach einem der Ansprüche 3 bis 4, worin das Wecksignal am Ende des Abwärtsstrecken-Teilrahmens gesendet wird.

6. Verfahren nach einem der Ansprüche 3 bis 4, worin das Wecksignal als eine Menge von gleichmäßig beabstandeten Tönen mit dem Bruchteil einer Symboldauer gesendet wird.

7. Verfahren nach einem der Ansprüche 3 bis 6, worin das mobile Endgerät in dem Wecksignal mittels seiner MAC-Adresse identifiziert wird.

8. Verfahren nach einem der Ansprüche 3 bis 6, worin das mobile Endgerät in dem Wecksignal mittels einer dem Endgerät zugewiesenen sektorspezifischen Adresse identifiziert wird.

9. Verfahren nach einem der Ansprüche 3 bis 6, worin das mobile Endgerät in dem Wecksignal mittels einer Kennung identifiziert wird, die auf einer dem Endgerät vorher zugewiesenen Identifizierungsnummer beruht, wie etwa die Verbindungskennung.

10. Verfahren zur Verwendung in einem mobilen Endgerät (3, 5, 7) in einem WiMAX-System, wobei das mobile Endgerät (3, 5, 7) dafür eingerichtet ist, mit einer Basisstation (1) zu kommunizieren und in die Leerlaufbetriebsart überzugehen, wenn es nicht mit der Basisstation (1) kommuniziert, wobei das Verfahren die folgenden Schritte umfasst:
- wenn in der Leerlaufbetriebsart: Empfangen eines Wecksignals von der Basisstation im mobilen Endgerät (3, 5, 7),
- bei Empfang des Wecksignals: Vorbereiten des mobilen Endgeräts (3, 5, 7) zum Empfangen eines Rundrufsignals durch Einschalten des Demodulators und Decoders des mobilen Endgeräts (3, 5, 7),
- Empfangen des Rundrufsignals, und
- bei Empfang des Rundrufsignals: Übergehen in die aktive Betriebsart, um zu beginnen, über die Basisstation (1) mit dem Netzwerk zu kommunizieren, wobei das Verfahren **dadurch gekennzeichnet ist, dass** das Wecksignal in einer der Übergangslücken, TTG oder RTG, in einem Rahmen empfangen wird.

11. Verfahren nach Anspruch 10, worin das Wecksignal ein einfaches Signal ist, das durch das mobile Endgerät durch einfache Energieermittlung empfangen werden kann.

12. Verfahren nach einem der Ansprüche 10 bis 11, worin das Wecksignal am Ende des Abwärtsstrecken-Teilrahmens empfangen wird.

13. Verfahren nach einem der Ansprüche 10 bis 12, worin das Wecksignal in dem Rahmen durch feste Blockzuteilung lokalisiert wird.

14. Verfahren nach einem der Ansprüche 10 bis 12, worin das Wecksignal als eine Menge von gleichmäßig beabstandeten Tönen mit dem Bruchteil einer Symboldauer empfangen wird.

15. Verfahren nach einem der Ansprüche 10 bis 13, worin das Wecksignal als einzelne oder mehrere Töne im Datenbereich des Abwärtsstrecken-Teilrahmens empfangen wird.

## Revendications

1. Station de base (1) destinée à être utilisée dans un système WiMAX pour communiquer avec un certain nombre de terminaux mobiles (3, 5, 7), ladite station de base (1) comprenant un moyen de communication (9) pour envoyer un signal de radiomessagerie à un terminal mobile identifié (3, 5, 7), le moyen de communication (9) étant conçu pour envoyer un signal d'activation à la station mobile identifiée (3, 5, 7), pour indiquer au terminal mobile identifié (3, 5, 7) qu'il doit se préparer à un signal de radiomessagerie, avant l'envoi du signal de radiomessagerie au terminal mobile identifié (3, 5, 7), la station de base (1) étant **caractérisée en ce que** le moyen de communication (9) est conçu pour placer le signal d'activation dans l'un des intervalles de transition, TTG ou RTG, dans une trame.

2. Terminal mobile (3, 5, 7) conçu pour communiquer avec une station de base (1) dans un système WiMAX, ledit terminal mobile (3, 5, 7) étant conçu pour passer en mode repos lorsqu'il ne communique pas avec la station de base (1) et comprenant une unité de réception (11) destinée à recevoir un signal de radiomessagerie lorsqu'il doit passer en mode actif pour commencer à communiquer avec le réseau par le biais de la station de base (1), l'unité de réception (11) étant également conçue, lorsqu'il est en mode repos, pour recevoir un signal d'activation de la station de base (1) et lors de la réception du signal d'activation, pour se préparer à recevoir le signal de radiomessagerie en allumant le démodulateur et le décodeur du terminal mobile, ledit terminal mobile (3, 5, 7) étant **caractérisé en ce que** l'unité de réception (11) est conçue pour détecter le signal d'activation dans l'un des intervalles de transition, TTG ou RTG, dans une trame.

3. Procédé destiné à être utilisé dans une station de base (1) dans un système WiMAX, la station de base (1) communiquant avec un certain nombre de terminaux mobiles (3, 5, 7), comprenant les étapes suivantes :
- la détermination du fait qu'un signal de radiomessagerie doit être envoyé à un terminal mobile identifié (3, 5, 7) dans le système ;
- l'envoi d'un signal d'activation, au terminal mobile identifié (3, 5, 7), pour indiquer que le terminal mobile identifié (3, 5, 7) est sur le point de recevoir un signal de radiomessagerie ;
- l'envoi d'un signal de radiomessagerie au terminal mobile identifié (3, 5, 7) peu après l'envoi du signal d'activation, le procédé étant **caractérisé en ce que** le signal d'activation est envoyé dans l'un des intervalles de transition, TTG ou RTG, dans une trame.

4. Procédé selon la revendication 3, dans lequel le signal d'activation est envoyé en tant que signal simple qui peut être reçu par le terminal mobile par simple détection d'énergie.

5. Procédé selon l'une quelconque des revendications 3 à 4, dans lequel le signal d'activation est envoyé à la fin de la sous-trame de liaison descendante.

6. Procédé selon l'une quelconque des revendications 3 à 4, dans lequel le signal d'activation est envoyé sous forme d'un ensemble de tonalités régulièrement espacées avec une durée de symbole fractionnaire.

7. Procédé selon l'une quelconque des revendications 3 à 6, dans lequel le terminal mobile est identifié dans le signal d'activation au moyen de son adresse MAC.

8. Procédé selon l'une quelconque des revendications 3 à 6, dans lequel le terminal mobile est identifié dans le signal d'activation au moyen d'une adresse spécifique à un secteur attribuée au terminal.

9. Procédé selon l'une quelconque des revendications 3 à 6, dans lequel le terminal mobile est identifié dans le signal d'activation au moyen d'un identifiant sur la base d'un numéro d'identification précédemment attribué au terminal, tel que l'ID de connexion.

10. Procédé destiné à être utilisé dans un terminal mobile (3, 5, 7) dans un système WiMAX, le terminal mobile (3, 5, 7) étant conçu pour communiquer avec une station de base (1) et pour passer en mode repos lorsqu'il ne communique pas avec la station de base (1), le procédé comprenant les étapes suivantes :
- la réception depuis la station de base d'un signal d'activation dans le terminal mobile (3, 5, 7) lorsqu'il est en mode repos,
- lors de la réception du signal d'activation, la préparation du terminal mobile (3, 5, 7) à recevoir un signal de radiomessagerie en allumant le démodulateur et le décodeur du terminal mobile (3, 5, 7) ;
- la réception du signal de radiomessagerie, et
- lors de la réception du signal de radiomessagerie, le passage en mode actif pour commencer à communiquer avec le réseau par le biais de la station de base (1), le procédé étant **caractérisé en ce que** le signal d'activation est reçu dans l'un des intervalles de transition, TTG ou RTG, dans une trame.

11. Procédé selon la revendication 10, dans lequel le signal d'activation est un signal simple qui peut être reçu par le terminal mobile par simple détection d'énergie.

12. Procédé selon l'une quelconque des revendications 10 à 11, dans lequel le signal d'activation est reçu à la fin de la sous-trame de liaison descendante.

13. Procédé selon l'une quelconque des revendications 10 à 12, dans lequel le signal d'activation est situé dans la trame par attribution de bloc fixe.

14. Procédé selon l'une quelconque des revendications 10 à 12, dans lequel le signal d'activation est reçu sous forme d'un ensemble de tonalités régulièrement espacées avec une durée de symbole fractionnaire.

15. Procédé selon l'une quelconque des revendications 10 à 13, dans lequel le signal d'activation est reçu sous forme de tonalités simples ou multiples dans la région de données de la sous-trame de liaison descendante.
